# EUROPÄISCHE PATENTSCHRIFT

(11) **EP 3 776 539 B1**
(45) Veröffentlichungstag und Bekanntmachung des Hinweises auf die Patenterteilung: **01.06.2022**
(21) Anmeldenummer: 19723680.5
(22) Anmeldetag: 25.04.2019
(51) Int. Cl.: G10L 15/22, G10L 13/027, G06N 3/00, G10L 15/06, G06F 21/50

(54) **VERFAHREN ZUM RECHNERGESTÜTZTEN LERNEN EINES ROBOTERS ÜBER EINEN SPRACHDIALOG**
METHOD FOR COMPUTER-AIDED TRAINING OF A ROBOT VIA SPEECH DIALOGUE
MÉTHODE POUR L'APPRENTISSAGE ASSISTÉ PAR ORDINATEUR D'UN ROBOT VIA UN DIALOGUE VOCAL

(30) Priorität: 15.05.2018 DE 102018207513
(43) Veröffentlichungstag der Anmeldung: 17.02.2021
(73) Patentinhaber: Siemens Aktiengesellschaft, 80333 München (DE)
(72) Erfinder: LANGEN, Manfred, 81827 München (DE)
(86) Internationale Anmeldenummer: PCT/EP2019/060668
(87) Internationale Veröffentlichungsnummer: WO 2019/219346

(56) Entgegenhaltungen:
- EP-A1- 3 306 485
- HOLZAPFEL H ET AL: "A dialogue approach to learning object descriptions and semantic categories", ROBOTICS AND AUTONOMOUS SYSTEMS, ELSEVIER SCIENCE PUBLISHERS, AMSTERDAM, NL, Bd. 56, Nr. 11, 30. November 2008 (2008-11-30), Seiten 1004-1013, XP025561295, ISSN: 0921-8890, DOI: 10.1016/J.ROBOT.2008.08.012 [gefunden am 2008-09-02]
- DUSAN S ET AL: "Adaptive dialog based upon multimodal language acquisition", MULTIMODAL INTERFACES, 2002. PROCEEDINGS. FOURTH IEEE INTERNATIONAL CO NFERENCE ON 14-16 OCT. 2002, PISCATAWAY, NJ, USA,IEEE, 1730 MASSACHUSETTS AVE., NW WASHINGTON, DC 20036-1992 USA, 14. Oktober 2002 (2002-10-14), Seiten 135-140, XP010624306, ISBN: 978-0-7695-1834-3
- Soledad Bedu ET AL: "How to Create a Great Experience with Pepper", , 30. September 2017 (2017-09-30), Seiten 1-87, XP055607388, Gefunden im Internet: URL:http://doc.aldebaran.com/download/Pepp er_B2BD_guidelines_Sept_V1.5.pdf [gefunden am 2019-07-19]
- Anonymous: "QiChat - Introduction Aldebaran 2.5.7.1 documentation", , 20 December 2017 (2017-12-20), pages 1-5, XP055607412, Retrieved from the Internet: URL:https://web.archive.org/web/2017122020 0127/http://doc.aldebaran.com/2-5/naoqi/in teraction/dialog/dialog.html [retrieved on 2019-07-19]

## Beschreibung

Die Erfindung betrifft ein Verfahren zum rechnergestützten Lernen eines Roboters über einen Sprachdialog. Ferner betrifft die Erfindung ein entsprechendes System zum rechnergestützten Lernen eines Roboters sowie ein Computerprogrammprodukt und ein Computerprogramm.

Aus dem Stand der Technik ist es bekannt, Roboter mit einem Sprachdialogsystem auszustatten, so dass der Roboter über einen Sprachdialog basierend auf menschlicher Sprache mit einem menschlichen Benutzer kommunizieren kann. Dabei kann der Benutzer dem Roboter im Rahmen von Lerndialogen auch bestimmte Ausdrucks- und Verhaltensweisen beibringen. Zum Beispiel kann er dem Roboter die Verwendung eines Roboternamens beibringen.

Ein solches Lernverfahren ist beispielsweise aus der Veröffentlichung H. Holzapfel et al: A dialogue approach to learning object descriptions and semantic categories, Robotics and Autonomous Systems 56(2008), Elsevier, S. 1004-1013, bekannt.

Obwohl die prinzipielle Lernfähigkeit eines Roboters erwünscht ist, kann ein Lerndialog mit einem Benutzer ggf. auch zu unerwünschten Ergebnissen führen, z.B. kann dem Roboter ein Schimpfwort als sein Name beigebracht werden. Um dies zu vermeiden, kann lokal im Roboter eine Überprüfung durchgeführt werden, gemäß der bestimmte sprachliche Ausdrücke als unzulässig erkannt werden und nicht vom Roboter gelernt werden. Dieser Mechanismus schützt jedoch nicht vor einer manipulative Veränderung der Programmierung des einzelnen Roboters dahingehend, dass originär nicht zulässige Sprachausdrücke wieder zugelassen werden.

Aufgabe der Erfindung ist es, ein Verfahren zum rechnergestützten Lernen eines Roboters über einen Sprachdialog zu schaffen, durch das zuverlässig unerwünschte Manipulationen am Roboter erkannt werden.

Diese Aufgabe wird durch die jeweiligen unabhängigen Ansprüche gelöst. Weiterbildungen der Erfindung sind in den abhängigen Ansprüchen definiert.

Das erfindungsgemäße Verfahren dient zum rechnergestützten Lernen eines Roboters über ein Sprachdialog. Der zu lernende Roboter ist dabei ein vorgegebener Roboter, der über ein Sprachdialogsystem verfügt, über das ein Benutzer mit dem vorgegebenen Roboter sprachlich kommunizieren kann. In einer bevorzugten Ausführungsform stellt der Roboter einen humanoiden Roboter dar, der menschliche Verhaltensweisen nachbildet.

Im erfindungsgemäßen Verfahren wird in dem vorgegebenen Roboter ein Lerndialog aufgerufen, um dem vorgegebenen Roboter basierend auf einer sprachlichen Kommunikation mit einem Benutzer die Verwendung von einem oder mehreren Sprachausdrücken beizubringen. Mit anderen Worten wird dem vorgegebenen Roboter im Rahmen des Lerndialogs die semantische Bedeutung des oder der Sprachausdrücke derart beigebracht, dass der Roboter automatisch in späteren Kommunikationsdialogen den jeweiligen Sprachausdruck korrekt in Reaktion auf Spracheingaben eines Benutzers verwendet. Der Aufruf des entsprechenden Lerndialogs kann z.B. durch eine Spracheingabe des Benutzers in das Sprachdialogsystem ausgelöst werden.

Im Rahmen des erfindungsgemäßen Verfahrens wird in Antwort auf einen Sprachausdruck, der durch den Benutzer mittels Spracheingabe im Rahmen des Lerndialogs in das Sprachdialogsystem eingegebenen wird und zu einer vorgegebenen Ausdruckskategorie gehört, eine Mehrzahl von einander entsprechenden Konzepten überprüft. Die Mehrzahl von Konzepten umfasst dabei ein lokal im vorgegebenen Roboter hinterlegtes Konzept und ein oder mehrere Konzepte, welche in einem oder mehreren weiteren Robotern hinterlegt sind, an welche im Rahmen des erfindungsgemäßen Verfahrens der durch den Benutzer eingegebene Sprachausdruck übermittelt wird. Mit anderen Worten ist der vorgegebene Roboter kommunikationstechnisch mit dem oder den weiteren Robotern geeignet verbunden, um den eingegebenen Sprachausdruck von dem vorgegebenen Roboter auch an den oder die weiteren Roboter zu übermitteln. Ein jeweiliges Konzept der Mehrzahl von Konzepten stellt einen maschinell lesbaren Programmcode dar, der die Zulässigkeit von Sprachausdrücken der vorgegebenen Ausdruckskategorie für eine sprachliche Ausgabe durch den vorgegebenen Roboter beschreibt.

Der obige Begriff der einander entsprechenden Konzepte ist dahingehend zu verstehen, dass die Konzepte bei originärer Speicherung in den jeweiligen Robotern identisch waren, jedoch im Nachhinein unter Umständen manipuliert wurden. Eine solche unbefugte Manipulation soll im Rahmen des erfindungsgemäßen Verfahrens erkannt werden.

Die Überprüfung eines jeweiligen Konzepts liefert ein erstes oder zweites Ergebnis, wobei gemäß dem ersten Ergebnis der durch den Benutzer eingegebene Sprachausdruck für eine Sprachausgabe durch den vorgegebenen Roboter zulässig ist und gemäß dem zweiten Ergebnis der durch den Benutzer eingegebene Sprachausdruck für eine Sprachausgabe durch den vorgegebenen Roboter nicht zulässig ist.

Im Rahmen des erfindungsgemäßen Verfahrens wird eine Konsistenzprüfung basierend auf den Ergebnissen der Überprüfung der Mehrzahl von Konzepten durchgeführt, wobei die Konsistenzprüfung dann erfolgreich ist, wenn die Überprüfung zumindest einer vorgegebenen Anzahl von Konzepten (d.h. die vorgegebene Anzahl oder mehr Konzepte) das gleiche Ergebnis liefert, wobei die vorgegebene Anzahl größer als 50% der Anzahl von Konzepten ist, welche die Mehrzahl von Konzepten enthält.

Im Falle einer erfolgreichen Konsistenzprüfung wird der durch den Benutzer eingegebene Sprachausdruck im vorgegebenen Roboter gespeichert, wenn das Ergebnis, dass die Überprüfung zumindest der vorgegebenen Anzahl von Konzepten liefert, das erste Ergebnis ist. Demgegenüber wird im Falle einer erfolgreichen Konsistenzprüfung der durch den Benutzer eingegebene Sprachausdruck verworfen (d.h. nicht im vorgegebenen Roboter gespeichert), wenn das Ergebnis, dass die Überprüfung zumindest der vorgegebenen Anzahl von Konzepten liefert, das zweite Ergebnis ist. Ebenso wird im Falle einer nicht erfolgreichen Konsistenzprüfung der durch den Benutzer eingegebene Sprachausdruck verworfen.

Das erfindungsgemäße Verfahren weist den Vorteil auf, dass über eine auf mehrere Roboter verteilte Speicherung und Überprüfung von Konzepten unbefugte Manipulationen an den Konzepten stark erschwert werden. Solche Manipulationen bleiben nur dann unerkannt, wenn sie in gleicher Weise auf allen Robotern, in denen die Konzepte gespeichert sind, durchgeführt werden.

In einer besonders bevorzugten Ausführungsform wird im Falle einer nicht erfolgreichen Konsistenzprüfung ferner eine Fehlermeldung durch den vorgegebenen Roboter über eine Benutzerschnittstelle ausgegeben. Vorzugsweise erfolgt die Aussage der Fehlermeldung als eine sprachliche Meldung über das Sprachdialogsystem. Mit dieser Variante der Erfindung wird der Benutzer, der den Lerndialog durchführt, unmittelbar auf die Inkonsistenz von Konzepten hingewiesen.

In einer weiteren, besonders bevorzugten Ausführungsform ist die oben definierte vorgegebene Anzahl, die im Rahmen der Konsistenzprüfung berücksichtigt wird, die Anzahl von Konzepten, welche die Mehrzahl von Konzepten enthält. Mit anderen Worten müssen alle Konzepte die Mehrzahl von Konzepten das gleiche Ergebnis liefern, damit die Konsistenzprüfung erfolgreich ist. Auf diese Weise wird ein besonders guter Schutz gegen Manipulationen der Konzepte erreicht.

In einer weiteren, besonders bevorzugten Ausführungsform umfasst ein jeweiliges Konzept eine Anzahl von Sprachausdrücken, welche in der vorgegebenen Ausdruckskategorie für eine sprachliche Ausgabe durch den vorgegebenen Roboter unzulässig sind, wobei die Überprüfung eines jeweiligen Konzepts ein zweites Ergebnis liefert, wenn der durch den Benutzer eingegebene Sprachausdruck in der Anzahl von Sprachausdrücken enthalten ist. Ansonsten liefert die Überprüfung des jeweiligen Konzepts das erste Ergebnis. Gemäß dieser Variante der Erfindung enthält ein jeweiliges Konzept unzulässige Sprachausdrücke nach Art einer Blacklist. Nichtsdestotrotz kann ein jeweiliges Konzept auch anders aufgebaut sein. Insbesondere kann ein Konzept zulässige Sprachausdrücke spezifizieren, wobei die Überprüfung des Konzepts nur dann das erste Ergebnis liefert, wenn der eingegebene Sprachausdruck in dem Konzept enthalten ist.

In einer weiteren bevorzugten Ausführungsform ist jedes Konzept der Mehrzahl von Konzepten Bestandteil der gleichen Blockchain, wobei im vorgegebenen Roboter und in jedem weiteren Roboter jeweils eine Kopie der Blockchain gespeichert ist. Die Technologie der Blockchain ist an sich bekannt und wird deshalb nicht weiter im Detail erläutert. Die Blockchain verkettet die auf den verschiedenen Robotern gespeicherten Konzepte und stellt Mechanismen zur Durchführung der Konsistenzprüfung gemäß der Erfindung bereit. Der Begriff der Kopie der Blockchain ist derart zu verstehen, dass alle Blockchains bei der originären Erzeugung auf den verschiedenen Rechnern identisch waren, wobei jedoch unter Umständen im Nachhinein unbefugte Manipulationen an einzelnen Blockchains durchgeführt wurden.

In einer weiteren bevorzugten Ausgestaltung wird mit dem aufgerufenen Lerndialog dem vorgegebenen Roboter die sprachliche Ausgabe seines Namens beigebracht. Alternativ oder zusätzlich kann dem vorgegebenen Roboter mit dem aufgerufenen Lerndialog auch die sprachliche Ausgabe des Namens des Benutzers beigebracht werden.

In einer besonders bevorzugten Ausführungsform sind der vorgegebene Roboter und der oder die weiteren Roboter humanoide Roboter. In einer weiteren Variante sind der oder die weiteren Roboter mit dem vorgegebenen Roboter baugleich, so dass jeder Roboter als vorgegebener Roboter gemäß dem erfindungsgemäßen Verfahren fungieren kann.

Neben dem oben beschriebenen Verfahren betrifft die Erfindung ein System zum rechnergestützten Lernen eines Roboters über einen Sprachdialog, umfassend den Roboter als vorgegebenen Roboter, der über ein Sprachdialogsystem verfügt, über das ein Benutzer mit dem vorgegebenen Roboter mittels menschlicher Sprache kommunizieren kann, sowie einen oder mehrere weitere Roboter, wobei der vorgegebene Roboter und der oder die weiteren Roboter zur Durchführung des erfindungsgemäßen Verfahrens bzw. einer oder mehrerer bevorzugter Varianten des erfindungsgemäßen Verfahrens eingerichtet sind.

Darüber hinaus betrifft die Erfindung einen Roboter, wobei der Roboter dazu eingerichtet ist, als vorgegebener Roboter im erfindungsgemäßen Verfahren bzw. in einer oder mehreren bevorzugten Varianten des erfindungsgemäßen Verfahrens zu arbeiten. Dieser Roboter enthält somit das oben definierte Sprachdialogsystem und kann mit den oben beschriebenen weiteren Robotern kommunizieren, um an diese Roboter den vom Benutzer eingegebenen Sprachausdruck zu übermitteln. Ferner ist der Roboter dazu konfiguriert, das Ergebnis der Konsistenzprüfung zu erhalten und basierend darauf den eingegebenen Sprachausdruck zu speichern bzw. zu verwerfen.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Darüber hinaus betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

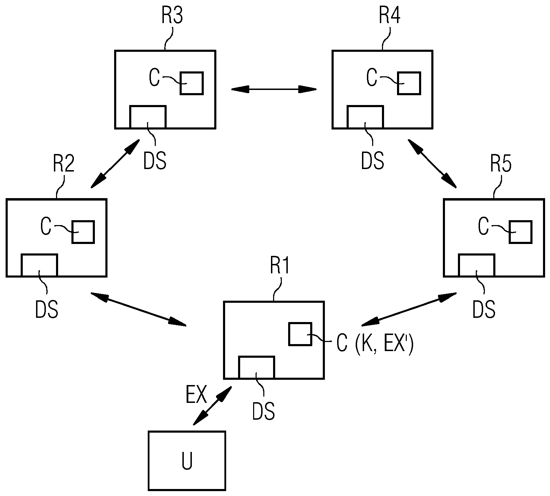

Ein Ausführungsbeispiel der Erfindung wird nachfolgend anhand der beigefügten Fig. 1 beschrieben. Diese Figur zeigt in schematischer Darstellung das Zusammenwirken einer Vielzahl von Robotern gemäß einer Variante des erfindungsgemäßen Verfahrens. Dabei stellt der Roboter R1 einen vorgegebenen Roboter im Sine des Anspruchs 1 dar. Bei diesem Roboter kann es sich beispielsweise um den bekannten Roboter Pepper von Softbank Robotics handeln.

Bevor eine Ausführungsform der Erfindung erläutert wird, erfolgt zunächst eine Beschreibung eines herkömmlichen Lerndialogs, mit dem ein Roboter durch sprachliche Interaktion mit einem menschlichen Benutzer seinen Namen lernen kann. Der Lerndialog basiert auf der an sich bekannten Syntax von QiChat, die als Teil des Moduls AIDialog im Betriebssystem NAOqi US des Roboters Pepper definiert ist. Nachfolgendes Beispiel betrifft den Lerndialog "~introduction ()", der z.B. durch ein geeignetes Sprachkommando eines Benutzers im Roboter aufgerufen werden kann. Der Lerndialog lautet wie folgt:

```
topic: -introduction ()
language: enu
u:(your name is _*) Thank you for the nice name $name=$1
u:(what is your name) ^first["my name is $name" "I don't
know"]
u1:(no) OK ^clear(name)
```

Durch die Zeile "topic" wird der Lerndialog spezifiziert. Die Zeile "language" gibt die Sprache des Lerndialogs an, die im betrachteten Beispiel und auch in allen weiteren Beispielen Englisch ist. Der Lerndialog beginnt gemäß der dritten Zeile mit der englische Aussage des Benutzers "your name is _*" (deutsch: "Dein Name ist _*"). Der Ausdruck _* stellt dabei eine Wildcard mit einem entsprechenden Namen dar, den der Benutzer durch Spracheingabe an den Roboter vergibt. Gemäß der dritten Zeile des obigen Lerndialogs antwortet der Roboter mit dem Satz "Thank you for the nice name" (deutsch: "Danke für den schönen Namen"). Gleichzeitig wird der Name gemäß der Wildcard _*, der zunächst in die flüchtige Variable $1 geschrieben wurde, der Variablen $name zugewiesen.

Gemäß der vierten Zeile des obigen Lerndialogs stellt der Benutzer die Frage "What is your name?" (deutsch: Was ist dein Name?"). Mit anderen Worten wünscht der Benutzer eine Bestätigung, ob der Roboter den an ihn vergebenen Namen richtig verstanden hat. Als Folge wird die Methode ^first im Lerndialog aufgerufen, gemäß der der Roboter die Antwort "my name is $name" (deutsch: "Mein Name ist $name") sprachlich ausgibt, sofern die Variable $name belegt ist. Ist diese Variable nicht belegt, gibt er als Antwort "I don't know" (deutsch: "Ich weiß es nicht") aus. Am Ende des Lerndialogs hat der Benutzer noch die Möglichkeit, der Aussage des Roboters zu widersprechen, z.B. wenn der Benutzer aufgrund der vorhergehenden Sprachausgabe des Roboters erkennt, dass der Name nicht richtig verstanden wurde. Der Benutzer kann in diesem Fall das Wort "no" (deutsch: "nein") sprechen. Falls der Benutzer dieses Wort spricht, antwortet der Roboter mit "OK" und es wird die Methode ^clear(name) aufgerufen. Gemäß dieser Methode wird die Belegung der obigen Variablen $name gelöscht, so dass der Roboter seinen Namen nicht weiß. Falls der Benutzer im Lerndialog nunmehr nochmals die Frage "What is your name?" stellt, antwortet der Roboter aufgrund der nicht vorhandenen Belegung der Variablen $name mit "I don't know".

Der obige Lerndialog hat den Nachteil, dass ein Benutzer missbräuchlich unerwünschte Namen, wie z.B. Schimpfwörter, an den Roboter vergeben kann. Um dies zu vermeiden, besteht die Möglichkeit, den Roboter lokal gegen die Vergabe von missbräuchlichen Namen zu schützen. Dies kann durch folgenden Lerndialog in QiChat erreicht werden:

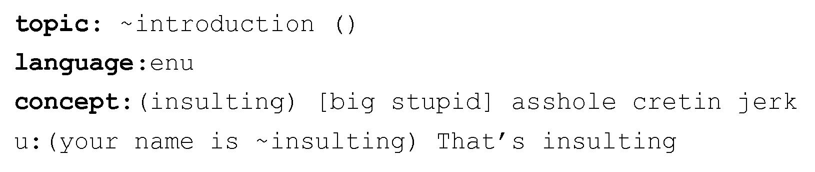

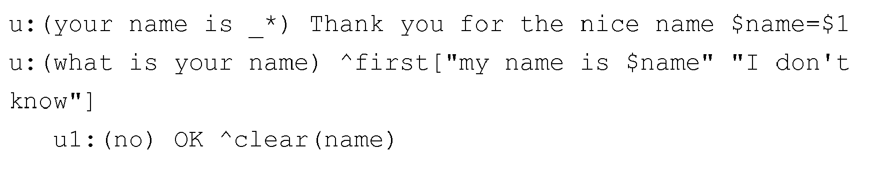

Der obige Lerndialog hat wiederum die Bezeichnung "~introduction ()" und es wird die Sprache Englisch verwendet. Im Unterschied zum vorhergehenden Lerndialog wird gemäß der dritten Zeile nunmehr jedoch ein Konzept durch die Bezeichnung "concept" definiert. Das Konzept hat den Namen "insulting" (deutsch: "beleidigend") und bezeichnet hierdurch die Kategorie von beleidigenden Schimpfwörtern. Dem Konzept werden dabei als Instanzen von beleidigenden Schimpfwörtern die Ausdrücke "asshole" (deutsch: Arschloch), "cretin" (deutsch: "Idiot") und "jerk" (deutsch: Trottel") zugeordnet. Darüber hinaus werden diese Schimpfwörter auch als Schimpfwörter erkannt, sofern sie mit den optionalen Zusätzen "big" (deutsch: "groß") und "stupid" (deutsch: "dumm") ausgesprochen werden, die in eckigen Klammern in der Zeile des Konzepts angegeben sind.

Bei der Ausführung des obigen Lerndialogs wird gemäß der vierten Zeile für eine von dem Benutzer getätigten Aussage zur Zuweisung eines Namens überprüft, ob die Aussage eine Instanz des Konzepts insulting enthält. Ist dies der Fall, gibt der Roboter als Sprachantwort "That's insulting" (deutsch: "Das ist beleidigend") aus. Enthält die Zuweisung des Namens durch den Benutzer keine Instanz des Konzepts insulting, wird genauso wie beim vorhergehenden Lerndialog verfahren. Mit anderen Worten gibt der Roboter die Sprachantwort "Thank you for the nice name" aus und die Variable $name wird mit dem vom Benutzer zugewiesenen Namen belegt. Anschließend kann der Benutzer wiederum nachfragen, wie der Name des Roboters ist, wobei der Roboter dann entweder seinen Namen ausgibt oder angibt, dass er seinen Namen nicht weiß, falls die Variable $name nicht belegt ist. Ferner kann der Benutzer dem Roboter durch die Aussage "no" im Hinblick auf die Namensvergabe widersprechen, woraufhin der Name gelöscht wird, was durch die letzte Zeile des obigen Lerndialogs zum Ausdruck kommt.

Die soeben beschriebene lokale Absicherung des Roboters bietet nur begrenzt Schutz gegen unbefugte Manipulationen. Insbesondere kann ein Angreifer, der sich lokal Zugang zu dem Roboter verschafft, die Liste von Schimpfwörtern ändern oder gegebenenfalls komplett streichen, so dass es wieder möglich ist, einem Roboter ein Schimpfwort als seinen Namen beizubringen. Um dieses Problem zu beheben, wird in der nachfolgend beschriebenen Ausführungsform der Erfindung eine verteilte Speicherung eines jeweiligen Konzepts in mehreren Robotern implementiert, wobei die Roboter untereinander kommunizieren können. Ein Szenario einer solchen verteilten Speicherung von Konzepten ist in Fig. 1 wiedergegeben.

Fig. 1 zeigt in schematischer Darstellung einen durch den Benutzer zu lernenden Roboter R1. Der Roboter umfasst ein Sprachdialogsystem DS, über das ein schematisch angedeuteter Benutzer U mit dem Roboter kommunizieren kann. Hierbei kann der Benutzer auch einen sprachlichen Lerndialog aufrufen, der analog zu den oben beschriebenen Lerndialogen dazu dient, dem Roboter seinen Namen beizubringen. Der Benutzer kommuniziert hierzu über das Sprachdialogsystem DS mit dem Roboter R1. Der Roboter R1 ist mit vier weiteren baugleichen Robotern R2, R3, R4 und R5 vernetzt. Diese Roboter können untereinander und mit dem Roboter R1 kommunizieren. Es wird somit ein Netzwerk aus Robotern gebildet, wobei die Struktur des Netzwerks unerheblich ist. In der Ausführungsform der Fig. 1 kommunizieren die Roboter in einer ringförmigen Topologie, wie durch Doppelpfeile zwischen den Robotern angedeutet ist.

Auf dem Roboter R1 ist das oben beschriebene Konzept insulting hinterlegt, das in Fig. 1 mit C bezeichnet ist. Dieses Konzept stellt eine Ausdruckskategorie K dar, welche im vorliegenden Fall Schimpfwörter bezeichnet. Als Instanzen der Schimpfwörter sind in dem Konzept C die oben beschriebenen Ausdrücke "asshole", "cretin" und "jerk" hinterlegt. Diese Ausdrücke werden in Fig. 1 einheitlich durch das Bezugszeichen EX' bezeichnet.

Erfindungswesentlich ist nunmehr, dass das Konzept C nicht nur lokal im Roboter R1, sondern auch in den weiteren Robotern R2, R3, R4 und R5 hinterlegt ist. Kopien des Kozepts C sind somit verteilt auf mehreren Robotern gespeichert. In der hier beschriebenen Ausführungsform wird die verteilte Speicherung basierend auf einer Blockchain erreicht, wobei die Technologie der Blockchain an sich bekannt ist und deshalb nicht im Detail erläutert wird. In jedem Roboter ist dabei eine Kopie der gleichen Blockchain gespeichert, wobei die Blockchain das originär im jeweiligen Roboter hinterlegte Konzept sowie Kopien der von den anderen Robotern stammenden Konzepte enthält. Ferner ist in dem Roboter R1 und den weiteren Robotern R2 bis R5 jeweils eine App hinterlegt, mit der die Konsistenz der Konzepte in den einzelnen Blockchains überprüft werden kann. Anstatt eine Blockchain zu verwenden, kann die verteilte Speicherung der Konzepte auch durch andere Mechanismen bewirkt werden. Es muss dabei sichergestellt werden, dass jeder Roboter eine Kopie des Konzepts C bei sich gespeichert hat.

In dem Szenario der Fig. 1 gibt der Benutzer U im Rahmen des Lerndialogs zum Zuweisen eines Namens einen entsprechenden Ausdruck EX über Spracheingabe ein. Dieser Ausdruck wird durch das Sprachdialogsystem DS des Roboters R1 erfasst und digitalisiert. Anschließend wird eine Methode der oben genannten App aufgerufen, um die Konsistenz der Konzepte C zu überprüfen. Hierzu wird der digitalisierte Ausdruck EX an alle weiteren Robotern R2, R3, R4 und R5 übermittelt. Jeder der Roboter R1 bis R5 überprüft dabei das originär bei ihm hinterlegte Konzept C dahingehend, ob die darin enthaltenen Instanzen den Ausdruck EX enthalten. Sofern die Konzepte nicht im Nachhinein manipuliert sind, liefern die Überprüfungen der Konzepte in den einzelnen Robotern immer das gleiche Ergebnis, d.h. der Ausdruck EX wird entweder als Schimpfwort oder nicht als Schimpfwort eingestuft.

Basierend auf den Ergebnissen der Überprüfungen der Roboter R1 bis R5 wird dann die Konsistenzprüfung unter Verwendung der Technologie der Blockchain durchgeführt. Im Rahmen der Konsistenzprüfung wird bestimmt, ob eine vorgegebene Mindestanzahl der Roboter, die größer als 50% der Gesamtanzahl der Roboter ist und vorzugsweise der Gesamtanzahl entspricht, das gleiche Ergebnis bei der Überprüfung des lokalen, originär gespeicherten Konzepts liefert. Ist dies der Fall, wird das Konzept C als konsistent dahingehend erachtet, dass es nicht manipuliert wurde. Ist dies nicht der Fall, wird die Inkonsistenz des Konzepts C festgestellt und im hier beschriebenen Ausführungsbeispiel eine entsprechende Warnung durch den Roboter R1 sprachlich ausgegeben, um den Benutzer von der Inkonsistenz des Konzepts in Kenntnis zu setzen. Ferner wird der eingegebene Ausdruck EX verworfen.

Wird das Konzept als konsistent eingestuft, wird je nach Ergebnis der Überprüfungen der Konzepte der vorgegebenen Mindestanzahl der Roboter entweder vom Roboter R1 ausgegeben, dass der Ausdruck EX beleidigend ist, oder der Roboter bestätigt den ihm zugewiesenen Namen durch eine Sprachausgabe.

Die oben beschriebene Konsistenzprüfung kann auch ohne die Verwendung einer Blockchain implementiert werden. Zum Beispiel kann jeder der Roboter R2 bis R5 das Ergebnis der Überprüfung seines Konzepts an den Roboter R1 rückmelden. In dem Roboter R1 liegen dann die Ergebnisse der Überprüfungen aller Konzepte vor, so dass dieser Roboter die Konsistenzprüfung durchführen kann.

Im Rahmen der Implementierung der soeben beschriebenen Ausführungsform wurde das obige Konzept "insulting" auf allen Robotern wie folgt hinterlegt:
**concept:** (insulting) [big stupid] asshole cretin jerk

Ein Lerndialog basierend auf der Syntax von QiChat ist im Roboter R1 dabei wie folgt ausgestaltet:

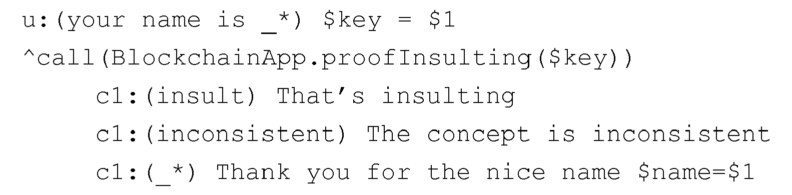

Gemäß dem obigen Lerndialog weist der Benutzer durch die Sprachaussage "Your name is _*" dem Roboter R1 einen Namen zu, der in der Variablen $key hinterlegt wird. Dann wird durch den Befehl ^call die Methode BlockchainApp.proof Insulting für die Variable $key aufgerufen. Anschließend erfolgt die oben beschriebene Überprüfung der entsprechenden Konzepte insulting in allen Robotern R1 bis R5. Es wird dabei das originär in jeweiligen Robotern gespeicherte Konzept überprüft, welches jedoch unter Umständen später manipuliert worden sein kann. Sofern die vorgegebene Mindestanzahl von Robotern bei der Überprüfung der lokal gespeicherten Konzepte zu dem gleichen Ergebnis kommt (d.h. $key ist ein Schimpfwort oder $key ist kein Schimpfwort), wird entweder die dritte Zeile oder die fünfte Zeile des obigen Lerndialogs ausgeführt. Das heißt, entweder gibt der Roboter die Sprachausgabe "That's insulting" zurück, sofern die Mindestanzahl von Robotern den Ausdruck $key als Schimpfwort einstuft, oder der Roboter gibt "Thank you for the nice name" zurück, sofern die Mindestanzahl von Robotern den Ausdruck $key nicht als Schimpfwort einstuft. Im letzteren Fall wird der Variablen $name der vom Benutzer eingegebene Ausdruck $key über die temporäre Variable $1 zugewiesen.

Sollte demgegenüber nicht die vorgegebene Mindestanzahl von Robotern mit gleichem Ergebnis der Konzeptüberprüfung erreicht werden, wird das Konzept als inkonsistent eingestuft, woraufhin gemäß der vierten Zeile des obigen Lerndialogs der Roboter den Satz "The concept is inconsistent" (deutsch: "Das Konzept ist inkonsistent") ausgibt. Auf diese Weise wird der Benutzer darüber in Kenntnis gesetzt, dass nachträglich eine Manipulation der Konzepte durchgeführt wurde. Anschließend wird der Lerndialog abgebrochen, ohne dass eine Belegung der Variablen $name mit dem Ausdruck $key erfolgt.

Im Vorangegangenen wurde die Erfindung anhand eines Lerndialogs mit dem Roboter R1 beschrieben. Da gemäß der Ausführungsform der Fig. 1 alle Roboter R1 bis R5 baugleich sind, kann ein entsprechender Lerndialog mit der damit verbundenen Konsistenzprüfung auch zwischen dem Benutzer U und jedem der weiteren Roboter R2 bis R5 durchgeführt werden.

Der oben beschriebene Lerndialog zur Zuweisung eines Namens zu einem Roboter ist lediglich beispielhaft. Die Erfindung kann ggf. auch für andere Lerndialoge zum Einsatz kommen, z.B. für einen Lerndialog, mit dem der Roboter den Namen des Benutzers lernt. Auch in diesem Fall ist sicherzustellen, dass Anreden des Benutzers in der Form von Schimpfwörtern vermieden werden.

Die im Vorangegangenen beschriebenen Ausführungsformen der Erfindung weisen eine Reihe von Vorteilen auf. Insbesondere wird ein effizienter Schutz eines Roboters vor einer unbefugten Manipulation von Konzepten erreicht, wobei mittels der Konzepte die Zulässigkeit von gelernten Sprachausdrücken überprüft wird. Dabei werden die Konzepte dezentral auf mehrere Roboter verteilt und deren Konsistenz untereinander überprüft, wodurch Manipulationen nur schwer durchführbar sind, da die Konzepte in diesem Fall in allen Robotern geändert werden müssen.

## Patentansprüche

1. Verfahren zum rechnergestützten Lernen eines Roboters über einen Sprachdialog, wobei der Roboter ein vorgegebener Roboter (R1) mit einem Sprachdialogsystem (DS) ist, über das ein Benutzer (U) mit dem vorgegebenen Roboter (R1) sprachlich kommunizieren kann, wobei:
- in dem vorgegebenen Roboter (R1) ein Lerndialog aufgerufen wird, um dem vorgegebenen Roboter (R1) basierend auf einer sprachlichen Kommunikation mit einem Benutzer (U) die Verwendung von einem oder mehreren Sprachausdrücken (EX) beizubringen;
- in Antwort auf einen Sprachausdruck (EX), der durch den Benutzer (U) mittels Spracheingabe im Rahmen des Lerndialogs in das Sprachdialogsystem (DS) eingegeben wird und zu einer vorgegebenen Ausdruckskategorie (K) gehört, eine Mehrzahl von Konzepten (C) überprüft wird, welche einander entsprechen und ein lokal im vorgegebenen Roboter (R1) hinterlegtes Konzept (C) und ein oder mehrere Konzepte (C) umfassen, welche in einem oder mehreren weiteren Robotern (R2, R3, R4, R5) hinterlegt sind, an welche der durch den Benutzer (U) eingegebene Sprachausdruck (EX) übermittelt wird, wobei ein jeweiliges Konzept (C) der Mehrzahl von Konzepten (C) die Zulässigkeit von Sprachausdrücken (EX) der vorgegebenen Ausdruckskategorie (K) für eine sprachliche Ausgabe durch den vorgegebenen Roboter (R1) beschreibt und die Überprüfung eines jeweiligen Konzepts (C) ein erstes oder zweites Ergebnis liefert, wobei gemäß dem ersten Ergebnis der durch den Benutzer (U) eingegebene Sprachausdruck (EX) zulässig ist und gemäß dem zweiten Ergebnis der durch den Benutzer (U) eingegebene Sprachausdruck (EX) nicht zulässig ist;
- eine Konsistenzprüfung basierend auf den Ergebnissen der Überprüfung der Mehrzahl von Konzepten (C) durchgeführt wird, wobei die Konsistenzprüfung dann erfolgreich ist, wenn die Überprüfung zumindest einer vorgegebenen Anzahl von Konzepten (C) das gleiche Ergebnis liefert, wobei die vorgegebene Anzahl größer als 50% der Anzahl von Konzepten (C) ist, welche die Mehrzahl von Konzepten (C) enthält;
- im Falle einer erfolgreichen Konsistenzprüfung der durch den Benutzer (U) eingegebene Sprachausdruck (EX) im vorgegebenen Roboter (R1) gespeichert wird, wenn das Ergebnis, das die Überprüfung zumindest der vorgegebenen Anzahl von Konzepten (C) liefert, das erste Ergebnis ist, und der durch den Benutzer (U) eingegebene Sprachausdruck (EX) verworfen wird, wenn das Ergebnis, das die Überprüfung zumindest der vorgegebenen Anzahl von Konzepten (C) liefert, das zweite Ergebnis ist;
- im Falle einer nicht erfolgreichen Konsistenzprüfung der durch den Benutzer (U) eingegebene Sprachausdruck (EX) verworfen wird.

2. Verfahren nach Anspruch 1, **dadurch gekennzeichnet, dass** im Falle einer nicht erfolgreichen Konsistenzprüfung ferner eine Fehlermeldung durch den vorgegebenen Roboter (R1) über eine Benutzerschnittstelle ausgegeben wird.

3. Verfahren nach Anspruch 1 oder 2, **dadurch gekennzeichnet, dass** die vorgegebene Anzahl die Anzahl von Konzepten (C) ist, welche die Mehrzahl von Konzepten (C) enthält.

4. Verfahren nach einem der vorhergehenden Ansprüche, **dadurch gekennzeichnet, dass** ein jeweiliges Konzept (C) eine Anzahl von Sprachausdrücken (EX') umfasst, welche in der vorgegebenen Ausdruckskategorie (K) für eine sprachliche Ausgabe durch den vorgegebenen Roboter (R1) unzulässig sind, wobei die Überprüfung eines jeweiligen Konzepts (C) das zweite Ergebnis liefert, wenn der durch den Benutzer eingegebene Sprachausdruck (EX) in der Anzahl von Sprachausdrücken (EX') enthalten ist.

5. Verfahren nach einem der vorhergehenden Ansprüche, **dadurch gekennzeichnet, dass** jedes Konzept (C) der Mehrzahl von Konzepten (C) Bestandteil der gleichen Blockchain ist, wobei im vorgegebenen Roboter (R) und in jedem weiteren Roboter (R2, R3, R4, R5) jeweils eine Kopie der Blockchain gespeichert ist.

6. Verfahren nach einem der vorhergehenden Ansprüche, **dadurch gekennzeichnet, dass** mit dem aufgerufenen Lerndialog dem vorgegebenen Roboter (R1) die sprachliche Ausgabe seines Namens beigebracht wird.

7. Verfahren nach einem der vorhergehenden Ansprüche, **dadurch gekennzeichnet, dass** mit dem aufgerufenen Lerndialog dem vorgegebenen Roboter (R1) die sprachliche Ausgabe des Namens des Benutzers (U) beigebracht wird.

8. Verfahren nach einem der vorhergehenden Ansprüche, **dadurch gekennzeichnet, dass** der vorgegebene Roboter (R1) und der oder die weiteren Roboter (R2, R3, R4, R5) humanoide Roboter sind.

9. Verfahren nach einem der vorhergehenden Ansprüche, **dadurch gekennzeichnet, dass** der oder die die weiteren Roboter (R2, R3, R4, R5) mit dem vorgegebenen Roboter (R1) baugleich sind.

10. System zum rechnergestützten Lernen eines Roboters über einen Sprachdialog, umfassend den Roboter als vorgegebenen Roboter (R1), der über ein Sprachdialogsystem (DS) verfügt, über das ein Benutzer (U) mit dem vorgegebenen Roboter (R1) mittels menschlicher Sprache kommunizieren kann, sowie einen oder mehrere weitere Roboter (R2, R3, R4, R5), wobei der vorgegebene Roboter (R1) und der oder die weiteren Roboter (R2, R3, R4, R5) zur Durchführung eines Verfahrens eingerichtet sind, bei dem:
- in dem vorgegebenen Roboter (R1) ein Lerndialog aufgerufen wird, um dem vorgegebenen Roboter (R1) basierend auf einer sprachlichen Kommunikation mit einem Benutzer (U) die Verwendung von einem oder mehreren Sprachausdrücken (EX) beizubringen;
- in Antwort auf einen Sprachausdruck (EX), der durch den Benutzer (U) mittels Spracheingabe im Rahmen des Lerndialogs in das Sprachdialogsystem (DS) eingegeben wird und zu einer vorgegebenen Ausdruckskategorie (K) gehört, eine Mehrzahl von Konzepten (C) überprüft wird, welche einander entsprechen und ein lokal im vorgegebenen Roboter (R1) hinterlegtes Konzept (C) und ein oder mehrere Konzepte umfassen, welche in dem oder den weiteren Robotern (R2, R3, R4, R5) hinterlegt sind, an welche der durch den Benutzer (U) eingegebene Sprachausdruck (EX) übermittelt wird, wobei ein jeweiliges Konzept (C) der Mehrzahl von Konzepten (C) die Zulässigkeit von Sprachausdrücken (EX) der vorgegebenen Ausdruckskategorie (K) für eine sprachliche Ausgabe durch den vorgegebenen Roboter (R1) beschreibt und die Überprüfung eines jeweiligen Konzepts (C) ein erstes oder zweites Ergebnis liefert, wobei gemäß dem ersten Ergebnis der durch den Benutzer (U) eingegebene Sprachausdruck (EX) zulässig ist und gemäß dem zweiten Ergebnis der durch den Benutzer (U) eingegebene Sprachausdruck (EX) nicht zulässig ist;
- eine Konsistenzprüfung basierend auf den Ergebnissen der Überprüfung der Mehrzahl von Konzepten (C) durchgeführt wird, wobei die Konsistenzprüfung dann erfolgreich ist, wenn die Überprüfung zumindest einer vorgegebenen Anzahl von Konzepten (C) das gleiche Ergebnis liefert, wobei die vorgegebene Anzahl größer als 50% der Anzahl von Konzepten (C) ist, welche die Mehrzahl von Konzepten (C) enthält;
- im Falle einer erfolgreichen Konsistenzprüfung der durch den Benutzer (U) eingegebene Sprachausdruck (EX) im vorgegebenen Roboter (R1) gespeichert wird, wenn das Ergebnis, das die Überprüfung zumindest der vorgegebenen Anzahl von Konzepten (C) liefert, das erste Ergebnis ist, und der durch den Benutzer (U) eingegebene Sprachausdruck (EX) verworfen wird, wenn das Ergebnis, das die Überprüfung zumindest der vorgegebenen Anzahl von Konzepten (C) liefert, das zweite Ergebnis ist;
- im Falle einer nicht erfolgreichen Konsistenzprüfung der durch den Benutzer (U) eingegebene Sprachausdruck (EX) verworfen wird.

11. System nach Anspruch 10, **dadurch gekennzeichnet, dass** das System zur Durchführung eins Verfahrens nach einem der Ansprüche 2 bis 9 eingerichtet ist.

12. Roboter, **dadurch gekennzeichnet, dass** der Roboter dazu eingerichtet ist, als vorgegebener Roboter (R1) in einem Verfahren nach einem der Ansprüche 1 bis 9 zu arbeiten.

13. Computerprogrammprodukt mit einem auf einem maschinenlesbaren Träger gespeicherten Programmcode zur Durchführung eines Verfahrens nach einem der Ansprüche 1 bis 9, wenn der Programmcode auf einem Computer ausgeführt wird.

14. Computerprogramm mit einem Programmcode zur Durchführung eines Verfahrens nach einem der Ansprüche 1 bis 9, wenn der Programmcode auf einem Computer ausgeführt wird.

## Claims

1. Method for the computer-aided training of a robot using speech dialogue, wherein the robot is a predefined robot (R1) having a speech dialogue system (DS) by way of which a user (U) is able to communicate with the predefined robot (R1) through speech, wherein:
- a training dialogue is called in the predefined robot (R1) in order to teach the predefined robot (R1) to use one or more speech expressions (EX) based on speech communication with a user (U);
- in response to a speech expression (EX) that is input into the speech dialogue system (DS) by the user (U) by way of speech input in the course of the training dialogue and belongs to a predefined expression category (K), a multiplicity of concepts (C) is checked, these corresponding to one another and comprising a concept (C) stored locally in the predefined robot (R1) and one or more concepts (C) that are stored in one or more further robots (R2, R3, R4, R5) to which the speech expression (EX) input by the user (U) is conveyed, wherein a respective concept (C) from the multiplicity of concepts (C) describes the admissibility of speech expressions (EX) from the predefined expression category (K) for a speech output performed by the predefined robot (R1), and the check of a respective concept (C) delivers a first or second result, wherein, according to the first result, the speech expression (EX) input by the user (U) is admissible and, according to the second result, the speech expression (EX) input by the user (U) is inadmissible;
- a consistency check is performed based on the results of the check of the multiplicity of concepts (C), wherein the consistency check is successful if the check of at least a predefined number of concepts (C) delivers the same result, wherein the predefined number is greater than 50% of the number of concepts (C) contained in the multiplicity of concepts (C);
- in the event of a successful consistency check, the speech expression (EX) input by the user (U) is stored in the predefined robot (R1) if the result delivered by the check of at least the predefined number of concepts (C) is the first result, and the speech expression (EX) input by the user (U) is discarded if the result delivered by the check of at least the predefined number of concepts (C) is the second result;
- in the event of an unsuccessful consistency check, the speech expression (EX) input by the user (U) is discarded.

2. Method according to Claim 1, **characterized in that**, in the event of an unsuccessful consistency check, a fault notification is furthermore output by the predefined robot (R1) via a user interface.

3. Method according to Claim 1 or 2, **characterized in that** the predefined number is the number of concepts (C) contained in the multiplicity of concepts (C).

4. Method according to one of the preceding claims, **characterized in that** a respective concept (C) comprises a number of speech expressions (EX') that are inadmissible for a speech output performed by the predefined robot (R1) in the predefined expression category (K), wherein the check of a respective concept (C) delivers the second result if the speech expression (EX) input by the user is contained in the number of speech expressions (EX').

5. Method according to one of the preceding claims, **characterized in that** each concept (C) of the multiplicity of concepts (C) is part of the same blockchain, wherein a respective copy of the blockchain is stored in the predefined robot (R) and in each further robot (R2, R3, R4, R5).

6. Method according to one of the preceding claims, **characterized in that** the predefined robot (R1) is taught to output its name through speech using the called training dialogue.

7. Method according to one of the preceding claims, **characterized in that** the predefined robot (R1) is taught to output the name of the user (U) through speech using the called training dialogue.

8. Method according to one of the preceding claims, **characterized in that** the predefined robot (R1) and the one or more further robots (R2, R3, R4, R5) are humanoid robots.

9. Method according to one of the preceding claims, **characterized in that** the one or more further robots (R2, R3, R4, R5) are structurally identical to the predefined robot (R1).

10. System for the computer-aided training of a robot using speech dialogue, comprising the robot as predefined robot (R1) having a speech dialogue system (DS) by way of which a user (U) is able to communicate with the predefined robot (R1) by way of human speech, and one or more further robots (R2, R3, R4, R5), wherein the predefined robot (R1) and the one or more further robots (R2, R3, R4, R5) are designed to perform a method, in which:
- a training dialogue is called in the predefined robot (R1) in order to teach the predefined robot (R1) to use one or more speech expressions (EX) based on speech communication with a user (U);
- in response to a speech expression (EX) that is input into the speech dialogue system (DS) by the user (U) by way of speech input in the course of the training dialogue and belongs to a predefined expression category (K), a multiplicity of concepts (C) is checked, these corresponding to one another and comprising a concept (C) stored locally in the predefined robot (R1) and one or more concepts that are stored in the one or more further robots (R2, R3, R4, R5) to which the speech expression (EX) input by the user (U) is conveyed, wherein a respective concept (C) from the multiplicity of concepts (C) describes the admissibility of speech expressions (EX) from the predefined expression category (K) for a speech output performed by the predefined robot (R1), and the check of a respective concept (C) delivers a first or second result, wherein, according to the first result, the speech expression (EX) input by the user (U) is admissible and, according to the second result, the speech expression (EX) input by the user (U) is inadmissible;
- a consistency check is performed based on the results of the check of the multiplicity of concepts (C), wherein the consistency check is successful if the check of at least a predefined number of concepts (C) delivers the same result, wherein the predefined number is greater than 50% of the number of concepts (C) contained in the multiplicity of concepts (C);
- in the event of a successful consistency check, the speech expression (EX) input by the user (U) is stored in the predefined robot (R1) if the result delivered by the check of at least the predefined number of concepts (C) is the first result, and the speech expression (EX) input by the user (U) is discarded if the result delivered by the check of at least the predefined number of concepts (C) is the second result;
- in the event of an unsuccessful consistency check, the speech expression (EX) input by the user (U) is discarded.

11. System according to Claim 10, **characterized in that** the system is designed to perform a method according to one of Claims 2 to 9.

12. Robot, **characterized in that** the robot is designed to operate as predefined robot (R1) in a method according to one of Claims 1 to 9.

13. Computer program product containing a program code stored on a machine-readable carrier for performing a method according to one of Claims 1 to 9 when the program code is executed on a computer.

14. Computer program containing a program code for performing a method according to one of Claims 1 to 9 when the program code is executed on a computer.

## Revendications

1. Procédé d'apprentissage assisté par ordinateur d'un robot via un dialogue vocal, dans lequel le robot est un robot (R1) prédéfini avec un système de dialogue vocal (DS) via lequel un utilisateur (U) peut communiquer par la voix avec le robot (R1) prédéfini, dans lequel :
- un dialogue d'apprentissage est lancé dans le robot (R1) prédéfini pour apprendre au robot (R1) prédéfini l'emploi d'une ou plusieurs expression(s) vocale(s) (EX) en se basant sur une communication vocale avec un utilisateur (U) ;
- en réponse à une expression vocale (EX) qui est saisie par l'utilisateur (U) dans le système de dialogue vocal (DS) par saisie vocale dans le cadre du dialogue d'apprentissage et appartient à une catégorie d'expressions (K) prédéfinie, une pluralité de concepts (C) est vérifiée, lesquels correspondent entre eux et comprennent un concept (C) enregistré localement dans le robot (R1) prédéfini et un ou plusieurs autres concepts (C) qui sont enregistrés dans un ou plusieurs autres robots (R2, R3, R4, R5), auxquels est transmise l'expression vocale (EX) saisie par l'utilisateur (U), dans lequel un concept (C) respectif de la pluralité de concepts (C) décrit l'admissibilité d'expressions vocales (EX) de la catégorie d'expressions (K) prédéfinie pour une émission vocale par le robot (R1) prédéfini et la vérification d'un concept (C) respectif fournit un premier ou deuxième résultat, dans lequel selon le premier résultat, l'expression vocale (EX) saisie par l'utilisateur (U) est admise et selon le deuxième résultat, l'expression vocale (EX) saisie par l'utilisateur (U) n'est pas admise ;
- un examen de cohérence basé sur les résultats de la vérification de la pluralité de concepts (C) est exécuté, dans lequel la vérification de cohérence est réussie si la vérification d'au moins un nombre prédéfini de concepts (C) fournit le même résultat, le nombre prédéfini étant supérieur à 50 % du nombre de concepts (C), lequel contient la pluralité de concepts (C) ;
- au cas où la vérification de cohérence est réussie, l'expression vocale (EX) saisie par l'utilisateur (U) est mise en mémoire dans le robot (R1) prédéfini lorsque le résultat que la vérification d'au moins le nombre prédéfini de concepts (C) fournit est le premier résultat, et l'expression vocale (EX) saisie par l'utilisateur (U) est rejetée lorsque le résultat que la vérification d'au moins le nombre prédéfini de concepts (C) fournit est le deuxième résultat ;
- au cas où la vérification de cohérence n'est pas réussie, l'expression vocale (EX) saisie par l'utilisateur (U) est rejetée.

2. Procédé selon la revendication 1, **caractérisé en ce qu'**au cas où la vérification de cohérence n'est pas réussie, un message d'erreur est en outre émis par le robot (R1) prédéfini par le biais d'une interface utilisateur.

3. Procédé selon la revendication 1 ou 2, **caractérisé en ce que** le nombre prédéfini est le nombre de concepts (C) qui contient la pluralité de concepts (C).

4. Procédé selon l'une des revendications précédentes, **caractérisé en ce qu'**un concept (C) respectif comprend un nombre d'expressions vocales (EX') qui ne sont pas autorisées dans la catégorie d'expressions (K) prédéfinie pour une émission vocale par le robot (R1) prédéfini, dans lequel la vérification d'un concept (C) respectif fournit le deuxième résultat lorsque l'expression vocale (EX) saisie par l'utilisateur est contenue dans le nombre d'expressions vocales (EX').

5. Procédé selon l'une des revendications précédentes, **caractérisé en ce que** chaque concept (C) de la pluralité de concepts (C) fait partie de la même chaîne de blocs, dans lequel respectivement une copie de la chaîne de blocs est conservée en mémoire dans le robot (R1) prédéfini et dans chaque autre robot (R2, R3, R4, R5).

6. Procédé selon l'une des revendications précédentes, **caractérisé en ce qu'**avec le dialogue d'apprentissage lancé, l'émission vocale du nom du robot est apprise au robot (R1) prédéfini.

7. Procédé selon l'une des revendications précédentes, **caractérisé en ce qu'**avec le dialogue d'apprentissage lancé, l'émission vocale du nom de l'utilisateur (U) est apprise au robot (R1) prédéfini.

8. Procédé selon l'une des revendications précédentes, **caractérisé en ce que** le robot (R1) prédéfini et le ou les autres robots (R2, R3, R4, R5) sont des robots humanoïdes.

9. Procédé selon l'une des revendications précédentes, **caractérisé en ce que** le ou les autres robots (R2, R3, R4, R5) sont de même construction que le robot (R1) prédéfini.

10. Système d'apprentissage assisté par ordinateur d'un robot via un dialogue vocal, comprenant le robot en tant que robot (R1) prédéfini qui dispose d'un système de dialogue vocal (DS) via lequel un utilisateur (U) peut communiquer au moyen de la langue humaine avec le robot (R1) prédéfini, ainsi qu'un ou plusieurs autres robots (R2, R3, R4, R5) dans lequel le robot (R1) prédéfini et le ou les autres robots (R2, R3, R4, R5) sont équipés pour exécuter un procédé, dans lequel :
- un dialogue d'apprentissage est lancé dans le robot (R1) prédéfini pour apprendre au robot (R1) prédéfini l'emploi d'une ou plusieurs expressions vocales (EX) en se basant sur une communication vocale avec un utilisateur (U) ;
- en réponse à une expression vocale (EX) qui est saisie par l'utilisateur (U) dans le système de dialogue vocal (DS) par saisie vocale dans le cadre du dialogue d'apprentissage et appartient à une catégorie d'expressions (K) prédéfinie, une pluralité de concepts (C) est vérifiée, lesquels correspondent entre eux et comprennent un concept (C) enregistré localement dans le robot (R1) prédéfini et un ou plusieurs autres concepts (C) qui sont enregistrés dans le ou les autres robots (R2, R3, R4, R5), auxquels est transmise l'expression vocale (EX) saisie par l'utilisateur (U), dans lequel un concept (C) respectif de la pluralité de concepts (C) décrit l'admissibilité d'expressions vocales (EX) de la catégorie d'expressions (K) prédéfinie pour une émission vocale par le robot (R1) prédéfini et la vérification d'un concept (C) respectif fournit un premier ou deuxième résultat, dans lequel selon le premier résultat, l'expression vocale (EX) saisie par l'utilisateur (U) est admise et selon le deuxième résultat, l'expression vocale (EX) saisie par l'utilisateur (U) n'est pas admise ;
- un examen de cohérence basé sur les résultats de la vérification de la pluralité de concepts (C) est exécuté, dans lequel la vérification de cohérence est réussie si la vérification d'au moins un nombre prédéfini de concepts (C) fournit le même résultat, le nombre prédéfini étant supérieur à 50 % du nombre de concepts (C), lequel contient la pluralité de concepts (C) ;
- au cas où la vérification de cohérence est réussie, l'expression vocale (EX) saisie par l'utilisateur (U) est mise en mémoire dans le robot (R1) prédéfini lorsque le résultat que la vérification d'au moins le nombre prédéfini de concepts (C) fournit est le premier résultat, et l'expression vocale (EX) saisie par l'utilisateur (U) est rejetée lorsque le résultat que la vérification d'au moins le nombre prédéfini de concepts (C) fournit est le deuxième résultat ;
- au cas où la vérification de cohérence n'est pas réussie, l'expression vocale (EX) saisie par l'utilisateur (U) est rejetée.

11. Système selon la revendication 10, **caractérisé en ce que** le système est équipé pour exécuter un procédé selon l'une des revendications 2 à 9.

12. Robot, **caractérisé en ce que** le robot est équipé pour travailler en tant que robot (R1) prédéfini dans un procédé selon l'une des revendications 1 à 9.

13. Produit de programme informatique comprenant un code de programme conservé en mémoire sur un support lisible sur machine pour exécuter un procédé selon l'une des revendications 1 à 9, lorsque le code de programme est exécuté sur un ordinateur.

14. Programme informatique comprenant un code de programme pour exécuter un procédé selon l'une des revendications 1 à 9, lorsque le code de programme est exécuté sur un ordinateur.
